# EUROPÄISCHE PATENTSCHRIFT

(11) **EP 0 983 191 B1**
(45) Veröffentlichungstag und Bekanntmachung des Hinweises auf die Patenterteilung: **04.10.2001**
(21) Anmeldenummer: 98913505.8
(22) Anmeldetag: 23.04.1998
(51) Int. Cl.: B64D 10/00

(54) **BESCHLEUNIGUNGS-SCHUTZANZUG**
ACCELERATION PROTECTIVE SUIT
TENUE VESTIMENTAIRE DE PROTECTION CONTRE LES EFFETS DE L'ACCELERATION

(30) Priorität: 20.04.1998 CH 90198
(43) Veröffentlichungstag der Anmeldung: 08.03.2000
(73) Patentinhaber: LSS Life Support Systems AG, 8702 Zollikon (CH)
(72) Erfinder: REINHARD, Andreas, CH-8702 Zollikon (CH)
(74) Vertreter: Salgo, Reinhold Caspar, Dr.
(86) Internationale Anmeldenummer: CH9800161
(87) Internationale Veröffentlichungsnummer: WO9954201

(56) Entgegenhaltungen:
- WO-A-91/03278
- GB-A- 959 350
- US-A- 2 228 115
- US-A- 3 523 301

## Beschreibung

Die vorliegende Erfindung betrifft einen Anzug zum Schutz vor Beschleunigungseffekten, wie sie in Hochleistungsflugzeugen beim Fliegen von Kurven auftreten, nach dem Oberbegriffe des Patentanspruches 1.

Solche Schutzanzüge sind mehrere bekannt geworden. Die dieser Erfindung am nächsten liegenden arbeiten mit dem Auftriebsprinzip: Der Körper des Piloten - oder im Falle von mehrsitzigen Flugzeugen natürlich auch des anderen fliegenden Personals - wird umgeben von einer flüssigkeitsführenden Doppelschicht. Die auf die körpereigenen Flüssigkeiten, vorab das Blut, wirkenden Beschleunigungskräfte wirken in gleichem Masse auch auf die im Schutzanzug vorhandene Flüssigkeit. Damit werden auf die Körperfläche Druckkräfte aufgebaut, die denen entsprechen, die von der Körperflüssigkeit auf die Haut wirken. Aus EP 0 376 027 B1 (D1) ist ein solcher Anzug bekannt. Diese aus D1 bekannte Umsetzung verlangt ein verhältnismässig grosses Flüssigkeitsvolumen, das aussen von einem wenig dehnbaren Anzug zusammengehalten wird. Zwar wird nun der Körper des Piloten von den Druckkräften auf Blutgefässe, innere Organe und Haut entlastet, anderseits wird sein Rumpf - Skelett und statische Muskulatur - durch das durch den Beschleunigungsfaktor multiplizierte Gewicht der mitgeführten Wassermasse in erheblichem Masse zusätzlich belastet, was den Einsatz eines die Wirbelsäule entlastenden Stützkorsetts bedingt. Ferner hat die Verwendung des Schutzanzuges nach D1 zur Folge, dass der Pilot das Flugzeug ohne fremde Hilfe weder besteigen noch verlassen kann. Die Wasser- oder allgemeiner: Flüssigkeitsfüllung kann erst im Flugzeug stattfinden. Ein Notausstieg mittels Schleudersitz ist kaum denkbar. Das Anlegen dieses genannten Schutzanzuges braucht zudem intensiv fremde Hilfe.

Aus US 5,153, 938 (D2) ist ein weiterer Schutzanzug bekannt, der im wesentlichen auf dem Auftriebsprinzip aufbaut. Ein innerer Anzug, der jedoch grosse Teile des Körpers unbedeckt lässt, besteht aus flüssigkeitsgefüllten flachen Blasen. Ein äusserer, darüber zu tragender Anzug, ist im wesentlichen undehnbar und hält das ganze Ensemble zusammen. Der durch die Blasen aufgebaute Druck wird durch den äusseren Anzug auf die vom inneren Anzug unbedeckten Körperteile übertragen.

Obwohl hier durch den Verzicht auf die Bedeckung des ganzen Körpers durch den inneren Anzug erheblich Flüssigkeit - und damit Masse und Gewicht - eingespart werden kann, ist der in D2 beanspruchte Schutzanzug immer noch schwer. Um das Gewicht weiter zu reduzieren und die Bewegungsfreiheit zu verbessern, wird in D2 auf die Druckkompensation der Arme völlig verzichtet. Sie wird ersetzt durch elastische Aermel; deren Kompensationswirkung ist nur insoweit beschleunigungsabhängig, als das Volumen der Arme durch die zusätzliche Beschleunigungskräfte auf das Blut zunimmt, und dadurch das elastische Material der Aermel zusätzlich gespannt wird.

Aus CH 687 573 (D3) ist ein weiterer Schutzanzug nach dem reinen Auftriebsprinzip bekannt, der jedoch einteilig aufgebaut ist, insofern die zugfeste Aussenhaut den äusseren Anzug bildet. Auch hier besteht ein Nachteil des Schutzanzuges in seinem hohen Gewicht.

Ein weiterer Schutzanzug ist in WO 91/03278 (D4) offenbart.

Dieser weist eine dem Körper des Trägers zugewandte innere flüssigkeitsdichte flexible und elastische Schicht auf, welche sich dem Körper des Trägers anpassen kann, und eine äussere, undehnbare, ebenfalls flüssigkeitsdichte Schicht. Innere und äussere Schicht können entlang von längs des Körpers verlaufenden Linien miteinander verbunden sein, wodurch eine Vielzahl von längsverlaufenden Kanälen entsteht. Um den Flüssigkeitsaustausch zwischen den einzelnen Längs-Kanälen zu ermöglichen, können diese Verbindungslinien unterbrochen sein, wodurch Verbindungskanäle zwischen den Längs-Kanälen entstehen. Der Schutzanzug nach D4 ist einteilig aufgebaut; Integration von Handschuhen und Schuhen in den Anzug ist vorgesehen.

Durch die Ausführung der inneren Schicht aus elastischem Material liegen zwar die flüssigkeitsgefüllten Kanäle mit ihrer inneren Schicht dicht am Körper an und bewirken auf dessen Oberfläche den angestrebten Gegendruck; hingegen werden auch die die innere und die äussere Schicht verbindenden Elemente gedehnt. Dies kann namentlich an Körperstellen mit grossem Krümmungsradius bewirken, dass die äussere undehnbare Schicht sich auswölbt oder/und die innere Schicht nicht mehr dicht am Körper anliegt. Ferner hat dies zu Folge, dass unter dem Einfluss einer zusätzlichen Beschleunigung in Z-Richtung verhältnismässig viel Flüssigkeit nachströmen kann und muss, wozu auch die äusseren Reservoirs notwendig sind.

Der in US 3,523,301 offenbarte Anzug - obwohl als reiner Druckanzug und nicht als Anzug zum Schutz vor Beschleunigungskräften konzipiert - weist gewisse Ähnlichkeiten mit der vorliegenden Patentanmeldung auf. Diese Ähnlichkeiten liegen vorab in der Verwendung einer äusseren Schicht des Anzuges, die aus wenig dehnbarem Material gefertigt ist; ferner darin, dass innerhalb dieser äusseren Schicht schlauchartige Elemente angeordnet sind, die mit einem Druckmedium beaufschlagt werden können und dann am Körper des Trägers anliegen und einen dem Binnendruck des Körpers entsprechenden Aussendruck

auf diesen ausüben. Das hier vorgesehene Druckmedium ist ein Gas und übt somit überall den selben Druck aus. Würde hier das Gas durch eine Flüssigkeit wie beispielsweise Wasser ersetzt, ergäben sich grosse Volumina schon unter normalen Verhältnissen (G=1), insbesondere jedoch unter Verhältnissen mit G≈10. Da mit dem Flüssigkeitsvolumen eine entsprechende Masse einhergeht, wären die aufgrund eines solchen Schutzanzuges durch den Träger aufzubringenden Beschleunigungskräfte unziemlich hoch. Auch hier wären daher äussere Reservoirs nötig.

Die Aufgabe, die durch die vorliegende Erfindung gelöst werden soll, besteht in der Schaffung eines Anzuges zum Schutz vor den Auswirkungen der Beschleunigungskräfte, die beim Kurvenfliegen in Hochleistungsflugzeugen auftreten, vorab in der momentanen und lokalen Z-Achse, ferner soll der zu schaffende Schutzanzug leichter sein, als die bisher bekannten, soll ermöglichen, dass er vom Träger ohne Hilfe an- und ausgezogen werden kann und ihn befähigen, das Flugzeug ohne Hilfe zu besteigen und zu verlassen und dem Träger ausserhalb des Flugzeuges allgemein eine normale Beweglichkeit erlauben.

Die Lösung der gestellten Aufgabe ist wiedergegeben im Patentanspruch 1 hinsichtlich ihrer wesentlichen Merkmale, in den weiteren Patentansprüchen hinsichtlich weiterer vorteilhafter Ausbildungen.

Der Erfindungsgedanke wird anhand der beigefügten Zeichnung näher erläutert es zeigen
- Fig. 1: einen Querschnitt durch einen Schichtaufbau des Schutzanzuges,
- Fig. 2: a eine Draufsicht
b einen ersten Schnitt
c einen zweiten Schnitt
d einen dritten Schnitt durch eine erste Anordnung von Verbindungsstellen,
- Fig. 3: eine zweite Anordnung von Verbindungsstellen,
- Fig. 4: eine dritte Anordnung von Verbindungsstellen,
- Fig. 5: a eine Draufsicht
b eine Seitenansicht einer vierten Anordnung von Verbindungsstellen,
- Fig. 6: eine Frontansicht auf ein erstes Ausführungsbeispiel des Schutzanzuges in zwei Varianten,
- Fig. 7: ein Detail aus der Rückansicht des ersten Ausführungsbeispiels,
- Fig. 8: eine Frontansicht auf das Aeussere des Ausführungsbeispiels von Fig. 6,
- Fig. 9a: einen Querschnitt durch ein erstes Ausführungsbeispiel einer Schliessvorrichtung,
- Fig. 9b: einen Querschnitt durch ein zweites Ausführungsbeispiel einer Schliessvorrichtung,
- Fig. 9c: einen Querschnitt durch eine Variante von Fig. 9b,
- Fig. 10: einen Querschnitt durch ein drittes Ausführungsbeispiel einer Schliessvorrichtung,
- Fig. 11: eine Frontansicht eines zweiten Ausführungsbeispieles des Schutzanzuges,
- Fig. 12: die Rückansicht von Fig. 11,
- Fig. 13: a einen Querschnitt durch ein viertes Ausführungsbeispiel einer Schliessvorrichtung,
b einen Querschnitt durch ein fünftes Ausführungsbeispiel einer Schliessvorrichtung,
- Fig. 14: eine Variante zu Fig. 1,
- Fig. 15: die Perspektive eines erfindungsgemässen Details.

Der erfindungsgemässe Schutzanzug ist grundsätzlich ein Zwischenkleidungsstück zwischen die Gliedmassen und den Rumpf bedeckender Unterwäsche oder einem besonderen Futter 1 einerseits und einem normalen Flieger-Combi 2 anderseits. Eingeschlossen in eine, in den folgenden Figuren eingehender dargestellte, Hülle 3 aus wenig dehnbarem textilen Material ist eine strukturiert aufgebaute doppelwandige und flüssigkeitsgefüllte Hülle 4, die grosse Teile des Körpers des Fliegers bedeckt.

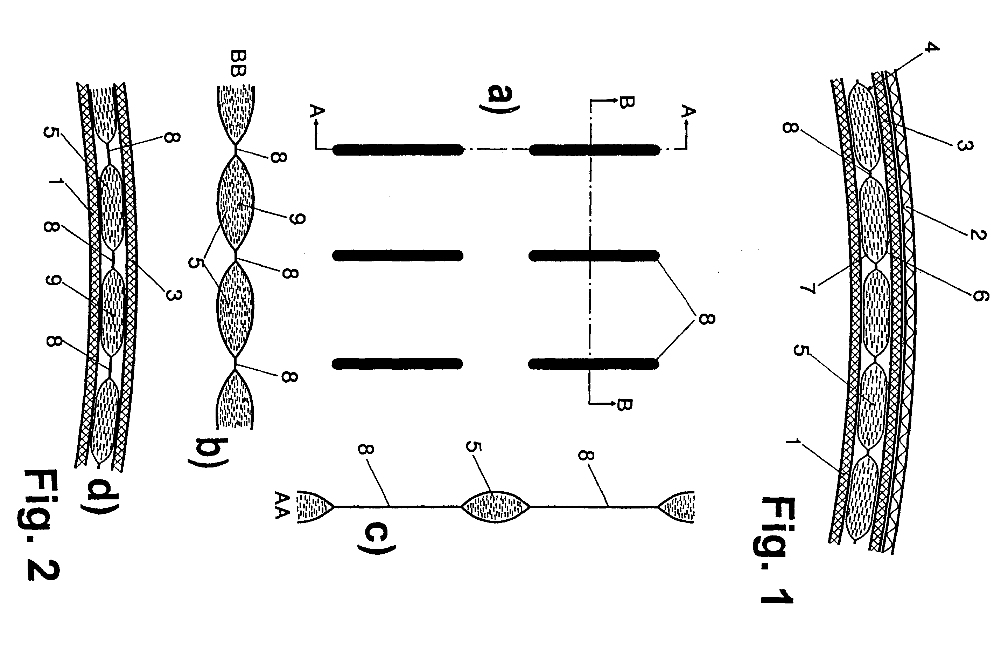

Fig. 1 zeigt einen Teil eines schematischen Querschnittes durch diesen Aufbau.

Die doppelwandige Hülle 4 kann bestehen aus einem beschränkt dehnbaren oder unelastischen und armierten Kunststoff. Sie weist eine äussere Wand 6 und eine innere Wand 7 auf, die an Verbindungsstellen 8 untereinander verbunden sind und so Hohlräume 5 entstehen lassen, die mit einer Flüssigkeit 9 gefüllt sind. Die Flüssigkeit 9 kann beispielsweise Wasser sein, allenfalls mit Zusätzen, die die Fliessfähigkeit und oder die Dichte beeinflussen.

Fig. 2 a, b, c, d, zeigt in Detailansichten das Anbringen von Verbindungsstellen 8 der Wände 6, 7. Diese Verbindungsstellen können durch Schweissen, Kleben oder Nähen hergestellt werden. In Fig. 2a ist schematisch aus einem Teil des Schutzanzuges ein Feld von beispielsweise sechs Verbindungsstellen 8 dargestellt. Jede einzelne Verbindungsstelle hat die Form eines langen schlanken Streifens. Ein Schnitt AA gemäss Fig. 2b zeigt, dass der Abstand zwischen den Enden der streifenförmigen Verbindungsstellen 8 verkürzt wird, sobald die im Hohlraum 5 zwischen den Wänden 6, 7 befindliche Flüssigkeit 9 zuströmt und unter Druck gesetzt wird. Dasselbe gilt für den seitlichen Abstand der Verbindungsstellen 8, wie im Schnitt BB gemäss Fig. 2c gezeigt.

Wird nun ein aus den Wänden 6, 7 bestehendes Gebilde um einen Körperteil, beispielsweise einen Oberschenkel herumgelegt, so ergibt sich, was in Fig. 2d schematisch dargestellt ist:

Die Hohlräume 5 werden gebläht und die innere Wand 7 legt sich an den Oberschenkel, die äussere Wand 6 legt sich an die wenig dehnbare äussere Hülle 3, die eine Zugspannung σ aufbaut. Im Inneren der Hohlräume 5 herrscht also der Druck p, in der äusseren Hülle 3 die Zugspannung σ, so dass ein bestimmter Druck einer bestimmten Zugspannung entspricht. An Stellen, die aus konstruktiven Gründen keine flüssigkeitsgefüllten Hohlräume 5 aufweisen können (wie später dargestellt), baut die äussere Hülle, unmittelbar am Körper anliegend, den der Zugspannung σ entsprechenden Flüssigkeitsdruck p auf.

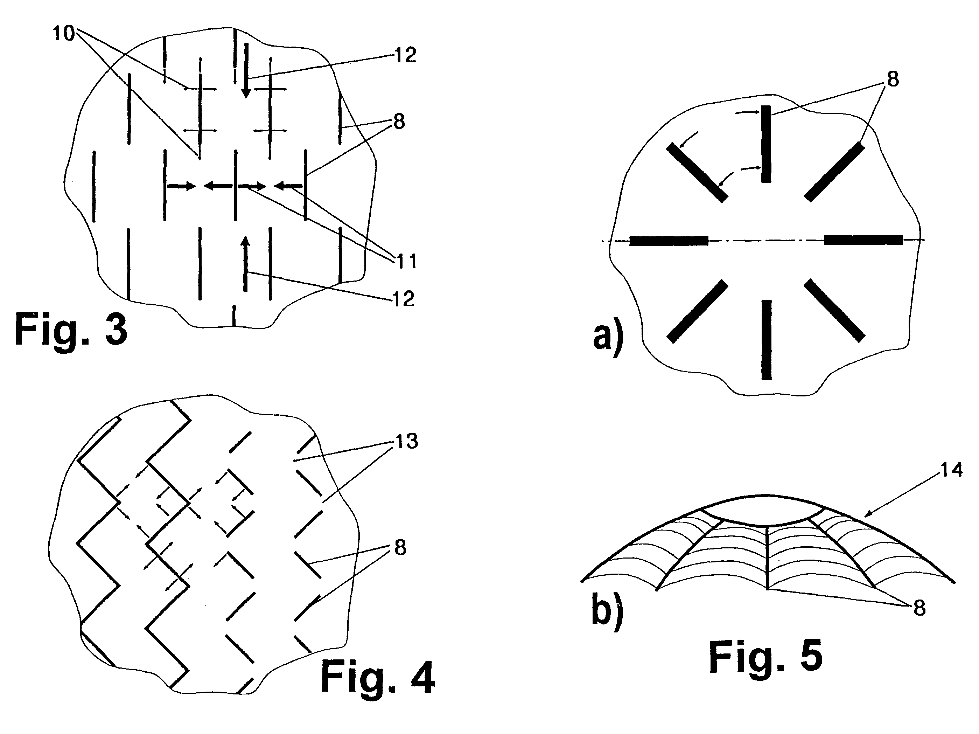

Fig. 3, 4, 5a, b zeigen verschiedene Anordnungen von Verbindungsstellen 8, die dann, wenn die Flüssigkeit 9 die Hohlräume 5 bläht, eine ganz bestimmte Verformung der doppelwandigen Hülle 4 zur Folge haben.

In Fig. 3 sind die Verbindungsstellen 8 in parallelen, versetzten Reihen angeordnet. Durch Druckanwendung auf die Flüssigkeit 9, die sich in den zwischen den Wänden 6, 7 entstehenden Hohlräumen 5 befindet, entstehen Kraftwirkungen auf die Verbindungsstellen 8 (kleine Pfeile 10 in Fig. 3). Dadurch verkürzt sich der aus den Wänden 6, 7 bestehende Aufbau vorzugsweise in der Richtung quer zu der Richtung der Verbindungsstellen 8 (grosse Pfeile 11 in Fig. 3). In weniger starkem Masse entsteht durch diese Anordnung jedoch auch eine solche Verkürzung in der Richtung der linearen Verbindungsstellen 8 (grosse Pfeile 12). Die zwischen den Wänden 6, 7 befindliche Flüssigkeit 9 hat bei dieser Anordnung grosse Mobilität; sie kann sowohl längs als auch quer zur Richtung der linearen Verbindungsstellen 8 strömen.

Die Anordnung gemäss Fig. 4 baut gegenüber jener von Fig. 3 annähernd isotrope Zugspannungen auf, da durch das Zickzack-Muster der Verbindungsstellen 8 die Projektionen in beiden Koordinatenrichtungen der Ebene der Wände 6, 7 annähernd gleich gross sind, oder doch mindestens gleich gross sein können. Damit kann auch ein annähernd isotropes Schrumpfen der Grösse des so mit Verbindungsstellen 8 versehenen Flächenstückes gegeben sein. Die zickzackförmigen Verbindungsstellen 8 in Fig. 4 können auch Unterbrüche 13 aufweisen, wie in der rechten Bildhälfte von Fig. 4 dargestellt. Damit ist die an sich etwas eingeschränkte Beweglichkeit der Flüssigkeit 9 zwischen den einzelnen Hohlräumen 5 verbessert.

Anstelle des dargestellten Zickzackmusters mit scharfen Ecken ist auch eine Ausbildung mit Rundungen im Erfindungsgedanken mitenthalten; anstelle eines Zickzackmusters im engeren Sinne tritt dann ein wellenförmiges. Unter diesem Begriffe sind alle solchen Ausbildungen zusammengefasst und zu verstehen.

Fig. 5a, b zeigen die druckbewirkte Verformung einer Anordnung von beispielsweise acht radial verlaufenden linear angelegten Verbindungsstellen 8. In Fig. 5a ist eine Draufsicht gezeigt, in Fig. 4b eine Seitenansicht, teilweise im Schnitt. Da sich die Zwischenräume zwischen den Verbindungsstellen 8 bei gleichem Druck annähernd proportional zum Abstand zwischen homologen Punkten zweier Verbindungsstellen 8 verkürzen, hebt sich die Anordnung kegelförmig aus der Ebene heraus und bildet einen Korb 14.

Eine solche Anordnung ist vorzugsweise an Körperstellen zu wählen, wo Rundungen zu umschliessen sind, wie Ellbogen, Knie, Gesäss; Anordnungen gemäss Fig. 3 werden vorzugsweise bei mehr zylindrischen oder flachen Körperteilen gewählt.

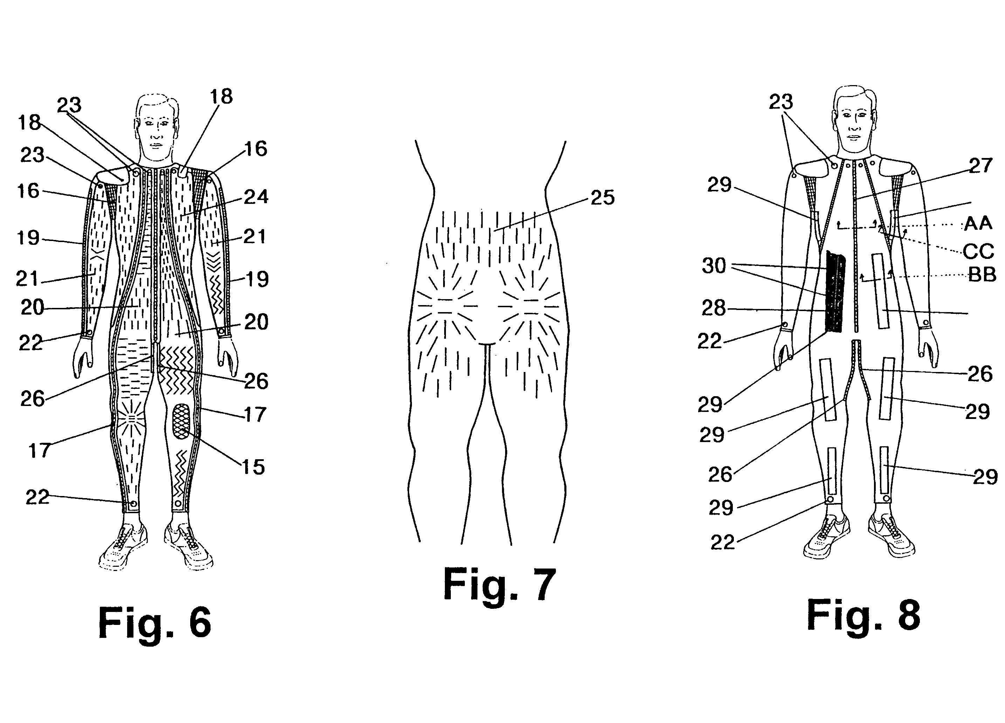

Ein erstes Ausführungsbeispiel des erfindungsgemässen Schutzanzuges zeigt Fig. 6, gleichzeitig in mehreren Varianten. Entfernt ist bei diesem die äussere Hülle 3, wodurch der Blick freigegeben ist auf die strukturierte doppelwandige Hülle 4.

Verschiedene Varianten sind hinsichtlich der Strukturen der Verbindungsstellen 8 dargestellt. Die Flächen tragen Strukturen gemäss Fig. 3, wo eher flache oder zylindrische Körperteile zu umschliessen sind, wie Thorax, Arme oder Unterschenkel. Der vom Betrachter aus linke Oberschenkel trägt ebenfalls Strukturen gemäss Fig. 3, jedoch in querverlaufender Anordnung, um beim Sitzen keine Leistenfalte entstehen zu lassen.

Das Knie desselben Beines trägt eine Struktur gemäss Fig. 5a, b; das andere Knie ist von der doppelwandigen Hülle 4 unbedeckt und weist als Schutz nur einen elastischen Einsatz 15 auf. Die restlichen Strukturen sind gemäss Fig. 4 angeordnet. Selbstverständlich werden beide Körperhälften hinsichtlich der verwendeten Strukturen gleich ausgebildet sein. Die Arme sind hinsichtlich der doppelwandigen Hülle 4 vom Rest des Schutzanzuges getrennt ausgeführt und mit diesem durch je einen elastischen Einsatz 16 verbunden.

Eine Variante dieses Ausführungsbeispiels weist keine Aermel auf, so dass der Schutzanzug beim elastischen Einsatz 16 endet. Die in Frontansicht dargestellte strukturierte doppelwandige Hülle 4 gemäss Fig. 6 ist auf dem Futter 1 beispielsweise mittels Klettverschlüssen oder Reissverschlüssen befestigt (nicht dargestellt). Die äussere Hülle 3 weist je einen über die ganze Anzugslänge sich erstreckenden Reissverschluss 17 auf. Ueber die Schultern ist der Schutzanzug mittels breiter, beispielsweise mit Klettverschlüssen versehenen Klappen 18. Die Klappe 18 in der rechten Bildhälfte ist für die ärmellose Version schmaler, diejenige der linken Bildhälfte breiter ausgeführt. Im Schritt sind zwei kurze Reissverschlüsse 26 angeordnet, die dem erleichterten Anziehen des Schutzanzuges dienen.

Die Aermel des Schutzanzuges sind ebenfalls mit über deren ganze Länge laufenden Reissverschlüssen 19 versehen. Die doppelwandige Hülle 4 besteht vorzugsweise aus mehreren Einzelteilen, die untereinander und/oder am Futter 1 mittels Klett- oder Reissverschlüssen verbunden sind. Jedes dieser Einzelteile - beispielsweise Vorderteile 20, Aermel 21, Thoraxteil 24 - weist ein unteres und ein oberes Ventil 22, 23 auf. Diese dienen zum Füllen und Entlüften der genannten Einzelteile.

Fig. 7 zeigt die Rückseite des Ausführungsbeispiels gemäss Fig. 6. Der mit 25 bezeichnete Rückenteil umfasst auch die Hinterseiten der Beine und kann mit dem Thoraxteil 24 flüssigkeitsmässig verbunden sein.

Im oberen Teil verlaufen die Verbindungsstellen 8 im wesentlichen vertikal; die Hauptspannungsrichtung verläuft horizontal und bewirkt einen Aussendruck auf die Organe der Bauchhöhle. Damit wird deren Volumen begrenzt; das Blut kann sich nicht dort ansammeln. Diese am Rücken gezeigte Anordnung wird auch nach vorne fortgesetzt. Das Gesäss wird bedeckt von Strukturen gemäss Fig. 5a, b, sodass jede Gesässhälfte für sich unter Druck von einer dort gezeigten Hohlform eingefasst ist.

Nach unten schliesst sich eine Zone an, in der die Oberschenkel vor allem unter einer längs des Umfanges wirkenden Zugspannung stehen.

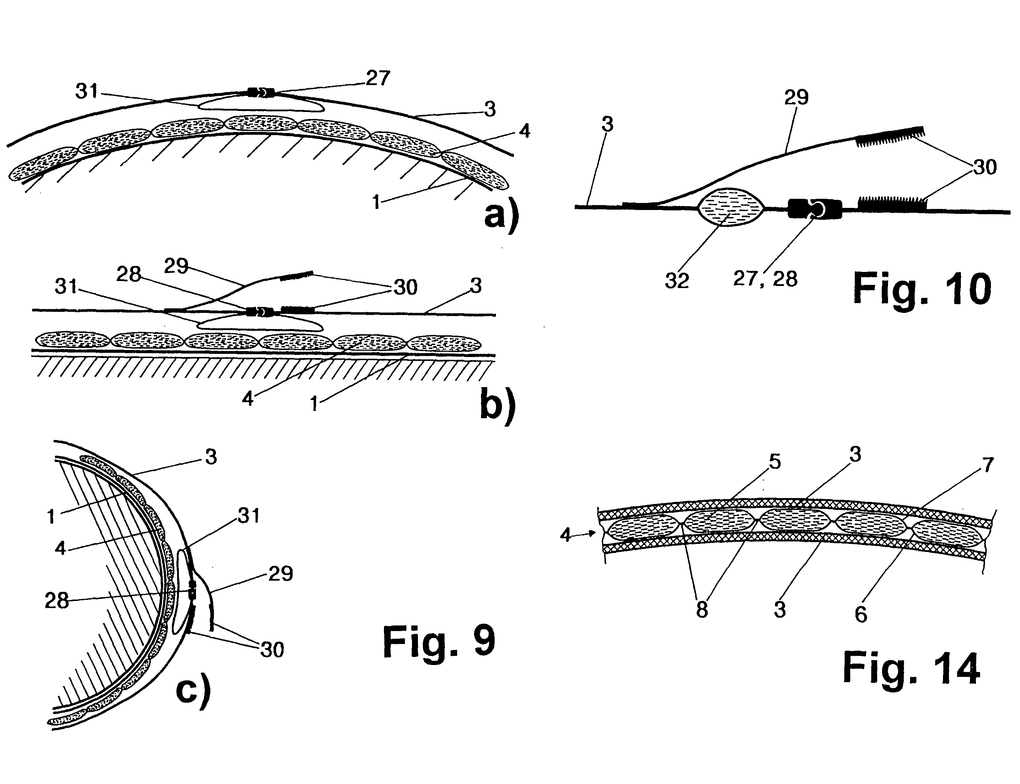

Fig. 8 ist eine Frontansicht auf die geschlossene äussere Hülle 3 des Schutzanzuges. Hier erscheint ein weiterer Reissverschluss 27, dessen Wirkungsweise in Fig. 9a näher gezeigt ist. Beispielsweise sechs weitere Reissverschlüsse 28 sind durch Klappen 29 mit Klettverschlüssen 30 abgedeckt. Diese werden anhand von Fig. 9b näher erläutert. Ebenso ist unter den Armen je ein Verschluss, der ebenfalls mit einer Klappe 29 abgedeckt ist. Deren Details ergeben sich aus Fig. 9c.

Die Aufgabe, die mit den vorgenannten Verschlüssen gelöst wird, besteht im Aufbau der Grundspannung der äusseren Hülle 3, die einen Grunddruck in den Hohlräumen 5 bewirkt und dafür sorgt, dass die Flüssigkeit 9 über die ganze Körper- bzw. Anzugslänge verteilt ist. Damit kann auf den Anbau von Reservoirs für die Flüssigkeit 9 verzichtet werden.

Die Darstellungen von Fig. 9a, b, c betreffen Details der Spannvorrichtungen der äusseren Hülle 3 gemäss Fig. 8.

Fig. 9a zeigt den Reissverschluss 27 im Schnitt AA. Zur besseren Sichtbarkeit sind das Futter 1, die doppelwandige Hülle 4 und die äussere Hülle 3 etwas auseinandergerückt. Die beiden Teile des Reissverschlusses 27 sind durch einen Einschlag 31 verbunden, der aus einem leichten textilen Material besteht. Mit einer leichten Schraffur ist der Körper des Trägers des Schutzanzuges angedeutet.

Der Schnitt BB von Fig. 8 ist in Fig. 9b dargestellt. Dieser Schnitt gilt für alle sechs durch Klappen 29 abgedeckten Spannvorrichtungen gemäss Fig. 8. Abgesehen von der Klappe 29, die mit dem Klettverschluss 30 verschlossen werden kann, ist der Aufbau der Vorrichtung, wie in Fig. 9a gezeigt: Der Einschlag 31 wird vom geschlossenen Reissverschluss 27 überbrückt; die Hüllen 3, 4 und das Futter 1 sind aus Darstellungsgründen etwas auseinandergerückt, der Körper des Trägers ist durch eine Schraffur angedeutet.

Der Aufbau der Vorrichtung gemäss Schnitt CC von Fig. 8 entspricht jenem des Schnittes BB und ist in Fig. 9c dargestellt. Anstatt eines Reissverschlusses ist hier auch eine Schnürung erfinderisch. Denn durch die Vorrichtung gemäss Fig. 9c kann die Weite des Thorax-Teiles des Schutzanzuges eingestellt werden.

Die Reissverschlüsse 27, 28 flankierend kann eine pneumatische Spannvorrichtung vorgesehen werden, wie in Fig. 10 schematisch dargestellt. In die äussere Hülle 3 eingefügt ist ein Strukturelement gemäss Fig. 3, das sich über mindestens die ganze Länge der flankierten Reissverschlüsse 27, 28 erstreckt und bildet eine langgestreckte Blase 32. Sie kann ausser am Rande auch dazwischen Verbindungsstellen 8 aufweisen. Nach dem Schliessen des Reissverschlusses 27, 28 werden die Blasen 32 aus dem bordseitigen Druckluftsystem aufgepumpt auf einen festgelegten Druck, der höher ist, als der höchstmögliche durch Beschleunigungseffekte in den tiefstgelegenen flüssigkeitsgefüllten Strukturen, die die Beine des Trägers umgeben. Damit können einerseits die Reissverschlüsse 27, 28 beim Schliessen entlastet werden, anderseits ist eine bestimmte notwendige Grundspannung der äusseren Hülle 3 sichergestellt.

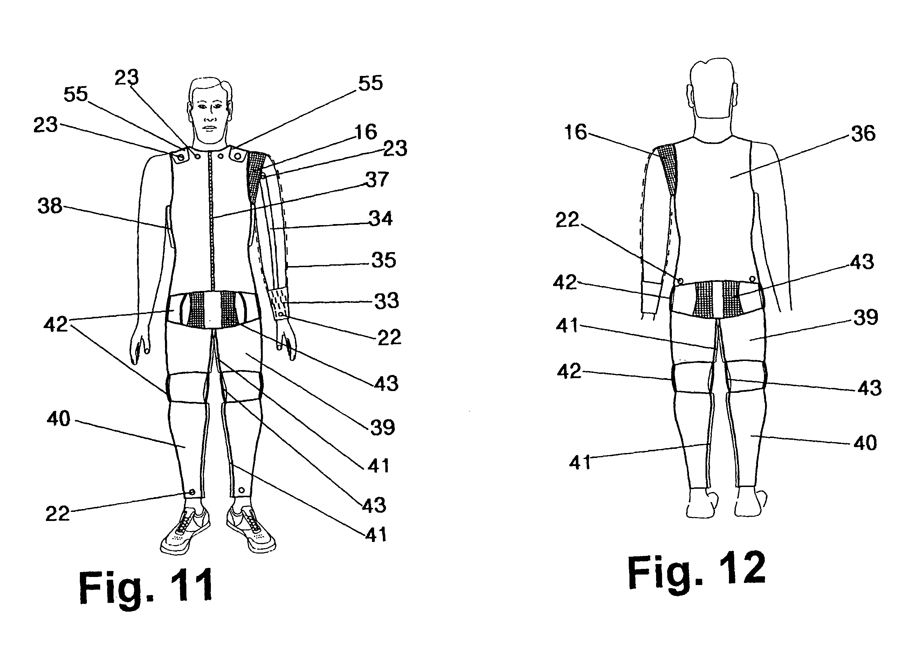

Ein zweites Ausführungsbeispiel eines erfindungsgemässen Schutzanzuges zeigen Fig. 11 und 12.

Fig. 11 ist eine Darstellung von vorne, Fig. 12 eine solche von hinten. Das hier gezeigte Ausführungsbeispiel lässt die Arme, Knie, Gesäss- und Leistenregion unbedeckt; unter Druckkompensation befinden sich also Oberkörper mit Abdominalbereich, Ober- und Unterschenkel. Zusätzlich kann, was in Fig. 11, 12 nur in der rechten Bildhälfte gezeigt ist, der Unterarm von einer Druckmanschette 33 umschlossen sein, die an einem spannungslosen Aermel 35 ein langgestrecktes Reservoir 34 aufweist. Druckmanschette 33 und Reservoir 34 sind, wie alle flüssigkeitsführenden Elemente in Fig. 11, 12 mit einem unteren und einem oberen Ventil 22, 23 versehen. Der Aermel 35 ist gestrichelt eingetragen.

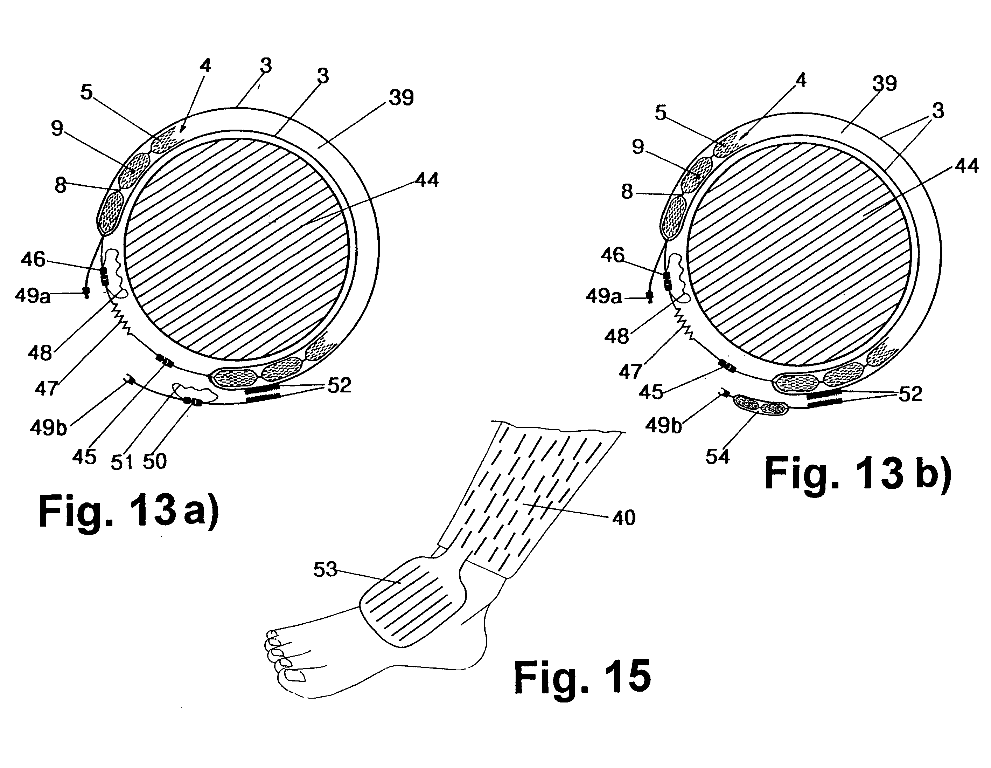

Der Oberkörper ist von einem Oberteil 36 umschlossen, der durch einen einfachen Reissverschluss 37 verschlossen wird. Spannvorrichtungen 38 für die äussere Hülle 3 sind unter den Armen angeordnet und Gegenstand von Fig. 10. Die Oberschenkel werden von Oberschenkelteilen 39, die Unterschenkel von Unterschenkelteilen 40 umschlossen. Deren Schliess- und Spannvorrichtungen 41 sind in Fig. 13 a, b dargestellt.

Oberteil 36, Ober- und Unterschenkelteile 39, 40 bilden hydraulisch ein einziges System.

Diese sind in vertikaler Richtung durch doppelwandige Hüllen 4 in Form von Verbindungselementen 42 vereinigt. Ferner sind elastische Textilbänder 43 vorgesehen, um Sitz und Zusammenhang des Schutzanzuges zu gewährleisten.

Ueber die Schultern wird das Oberteil 36 durch zwei breite Laschen 55 geschlossen, die ebenfalls doppelwandige Hüllen enthalten und an dieser Stelle Reservoirfunktion übernehmen.

Fig. 13a, b sind Darstellungen zweier Varianten der Schliess- und Spannvorrichtungen 41 und mit einer kleinen Modifikation auch der Spannvorrichtung 38.

Die erste Variante gemäss Fig. 13a ist beispielsweise am Oberschenkelteil 39 gezeigt, der um einen schematisch dargestellten Oberschenkel 44 herumgelegt ist. Ein erster Reissverschluss 45 öffnet den Oberschenkelteil 39 der Länge nach völlig. Ein zweiter Reissverschluss 46 ist mit diesem durch ein elastisches Textilband 47 verbunden und überbrückt einen Einschlag 48.

Zum Anlegen des Schutzanzuges sind die Reissverschlüsse 45, 46 geöffnet; anschliessend wird Reissverschluss 45 geschlossen. Dem Träger des Schutzanzuges bleibt damit die volle Beweglichkeit. Nach dem Schliessen des Reissverschlusses 46 ist diese bereits etwas eingeengt und wird durch das Schliessen eines dritten Reissverschlusses 49a, b weiter reduziert. Die Beweglichkeit lässt das Führen eines Flugzeuges zu, jedoch kein Gehen mehr. Ein vierter Reissverschluss 50, der einen weiteren Einschlag 51 überbrückt, wird anschliessend zugezogen und verteilt die Flüssigkeit 9 in den Hohlräumen 5 nach oben. Ein Klettverschluss 52 dient - vor dem Zuziehen aller Reissverschlüsse 45, 46, 49, 50 - zur Anpassung des Schutzanzuges an die momentanen Bedingungen des Trägers.

Die Variante gemäss Fig. 13b weist anstelle von Reissverschluss 50 und Einschlag 51 eine - diesmal pneumatische - Struktur auf, analog zur Hülle 4 und ist als Spannelement 54 vorgesehen. Nach dem Zuziehen von Reissverschluss 49 wird das Spannelement 54 aus dem bordeigenen Druckluftsystem auf einen vorgegebenen Druck aufgepumpt, verkürzt sich daher und spannt, wie vorgesehen, den Oberschenkelteil, analog zu dem zu Fig. 10 gesagten.

Ein erfindungsgemässes Detail zeigt Fig. 15. Hier ist das Unterschenkelteil 40 fortgesetzt in eine Lasche 53, die ebenfalls flüssigkeitsgefüllt und als Hülle 4 aufgebaut ist. Diese Lasche 53 wird in den - nicht dargestellten - Fliegerstiefel eingelegt und mit dessen Schnürung festgezogen. Mit der beschleunigungsabhängigen Druck- und Volumenzunahme in der Lasche 53 nimmt auch die Umlaufspannung des Fliegerstiefels zu und beschränkt damit den Blutfluss in die Venen des Fusses.

Gegenüber dem Ausführungsbeispiel von Fig. 11, 12 liegt der Vorteil in der relativ grossen Gewichtseinsparung. Diese wird allerdings damit erkauft, dass Knie, Gesäss und allenfalls und vor allem Unterarme unbedeckt bleiben. Dies kann jedoch verantwortet werden, da die Venen in Gesäss und Knien durch verhältnismässig starke Schichten von Muskulatur und/oder Bindegewebe bedeckt sind.

## Patentansprüche

1. Anzug zum Schutze seines Trägers vor Beschleunigungskräften, wie sie in Hochleistungsflugzeugen beim Fliegen von Kurven auftreten, der Anzug grösstenteils als doppelwandige Hülle (4) ausgeführt ist, und die dadurch entstehenden Hohlräume (5) mit einer Flüssigkeit (9) gefüllt sind, die beim Entstehen von Beschleunigungen ≠ 1g in der momentanen und lokalen Z-Achse einen dem Binnendruck des Trägers des Anzuges entsprechenden kompensatorischen Aussendruck aufbaut, wobei die doppelwandige Hülle (4) eine äussere Wand (6) aufweist, welche aus einem ein wenig dehnbaren flüssigkeitsdichten flexiblen Material besteht, die in den Hohlräumen (5) befindliche Flüssigkeit (9) über die ganze Höhe des Anzuges durchgehende Flüssigkeitssäule bilden, eine die Hülle (4) innen bildende innere Wand (7) vorhanden ist und mit der äusseren Wand (6) an Verbindungsstellen (8) miteinander verbunden ist, wodurch die genannten Hohlräume (5) entstehen und ferner Mittel vorhanden sind zum Schliessen des Anzuges und zu seiner Anpassung an die momentane Körpersituation ihres Trägers, **dadurch gekennzeichnet, dass**
- die innere Wand (7) ebenfalls aus einem wenig dehnbaren und flüssigkeitsdichten und flexiblen Material besteht,
- eine äussere Hülle (3) vorhanden ist, welche die doppelwandige Hülle (4) umgibt und grosse Teile des Körpers des Trägers bedeckt und aus wenig dehnbarem textilem Material gefertigt ist,
- die genannte äussere Hülle (3) so geformt ist, **dass** durch den Druck in den Hohlräumen (5) in dieser äusseren Hülle (3) Zugspannungen aufgebaut werden, die auf die von der doppelwandigen Hülle (4) unbedeckten Körperstellen übertragen werden und dort einen der Zugspannung entsprechenden Druck aufbauen kann,
- die die Hohlräume (5) begrenzenden Verbindungsstellen (8) in solchen Strukturen angeordnet sind, **dass** die durch den Druck der in den Hohlräumen (5) befindliche Flüssigkeit bewirkte Verformung der doppelwandigen Hülle (4) die innere aus wenig dehnbarem Material gefertigte Wand (7) faltenlos an den Körper des Trägers anliegen lässt,
- Mittel zum Spannen der äusseren Hülle (3) des Anzugs vorhanden sind.

2. Anzug nach Patentanspruch 1, **dadurch gekennzeichnet, dass** die Verbindungsstellen (8) durch Kleben erzeugt sind.

3. Anzug nach Patentanspruch 1, **dadurch gekennzeichnet, dass** die Verbindungsstellen (8) durch Schweissen erzeugt sind.

4. Anzug nach Patentanspruch 1, **dadurch gekennzeichnet, dass** die Verbindungsstellen (8) durch Nähen und Abdichten erzeugt sind.

5. Anzug gemäss Patentanspruch 1 und einem der Patentansprüche 2 bis 4, **dadurch gekennzeichnet, dass** er im wesentlichen den ganzen Körper mit Ausnahme von Hals, Kopf, Händen und Füssen bedeckt, der Anzug also ein Thoraxteil (24), ein Vorderteil (20), ein Rückenteil (25), Aermel (21) und aus Oberschenkelteil (39) und Unterschenkelteil (40) bestehende Beinteile aufweist.

6. Anzug nach Patentanspruch 1 und einem der Patentansprüche 2 bis 4, **dadurch gekennzeichnet, dass** er nur den ganzen Rumpf und die Beine des Trägers bedeckt.

7. Anzug nach Patentanspruch 1 und einem der Patentansprüche 2 bis 4, **dadurch gekennzeichnet, dass** er nur den Oberkörper einschliesslich Bauch/Abdominalregion mittels eines Oberteiles (36), die Oberschenkel und die Unterschenkel mittels je eines Oberschenkelteils (39) und eines Unterschenkelteils (40) bedeckt und daher Arme, Gesäss und Knie freilässt, die freigelassenen Körperregionen mindestens teilweise mit elastischen textilen Bändern (43) bedeckt, die die genannten Teile des Anzuges verbinden und in Form von Verbindungselementen (42) Mittel aufweist und die Flüssigkeitssäule über die ganze Höhe des Anzuges sich erstrecken zu lassen.

8. Anzug gemäss Patentansprüchen 5, 6 oder 7, **dadurch gekennzeichnet, dass** die Hohlräume (5) und die sie abteilenden Verbindungsstellen (8) sich vollständig über den ganzen Anzug erstrecken und nur die Orte, wo die Mittel zum Anpassen und Schliessen des Anzuges sich befinden, davon ausgenommen sind.

9. Anzug gemäss Patentanspruch 5, 6, oder 7, **dadurch gekennzeichnet, dass** die einzelnen Verbindungsstellen (8) im wesentlichen auf zu einander parallelen Linien liegen und die Abstände der auf einer einzelnen Linie liegenden Verbindungsstellen (8) etwa deren seitlichen Abständen entsprechen.

10. Anzug gemäss Patentansprüchen 5, 6 oder 7, **dadurch gekennzeichnet, dass**
- die Verbindungsstellen (8) gerade Strecken sind, die im wesentlichen parallel zueinander verlaufen, deren Länge etwa deren seitlichen Abständen entsprechen,
- die einzelnen Verbindungsstellen (8) im wesentlichen auf zwei Scharen von parallelen Linien liegen, die um den halben seitlichen Abstand zweier benachbarter Verbindungsstellen (8) gegeneinander versetzt sind, die Abstände der auf einer einzelnen Linie liegenden Verbindungsstellen (8) etwa ihrem doppelten seitlichen Abstand entsprechen.

11. Anzug gemäss Patentanspruch 5, 6 oder 7, **dadurch gekennzeichnet, dass** die einzelnen Verbindungsstellen (8) gerade Strecken sind, die im wesentlichen radial um einen Punkt angeordnet sind und diese Anordnung von Verbindungsstellen (8) eingesetzt werden kann, wo eine korbförmige Verformung der untereinander verbundenen Wände (6, 7) bewirkt werden soll.

12. Anzug gemäss Patentansprüchen 5, 6 oder 7, **dadurch gekennzeichnet, dass** die Mittel zum Schliessen aus Reissverschlüssen (17, 19) bestehen.

13. Anzug gemäss Patentanspruch 5 oder 6, **dadurch gekennzeichnet, dass** der Anzug Klappen (18) aufweist, die mit Klettverschlüssen bestückt sind, und der Anzug mit den über die Schultern laufenden Klappen (18) verschliessbar ist.

14. Anzug gemäss Patentanspruch 5 oder 6, **dadurch gekennzeichnet, dass** die Mittel zum Spannen der äusseren Hülle (3) aus einer Vielzahl von Reissverschlüssen (27, 28) bestehen, welche an je ihren beiden Hälften je mit der äusseren Hülle (3) und je mit den Enden je eines Einschlages (31) verbunden sind, welcher beim Schliessen der Reissverschlüsse (27, 28) überbrückt und die Hülle (3) durch das Schliessen der Reissverschlüsse (27, 28) gespannt wird.

15. Anzug gemäss Patentansprüch 5, 6 oder 7 und 14, **dadurch gekennzeichnet, dass** die Mittel zum Spannen der äusseren Hülle (3) aus sich über die ganze Länge der Reissverschlüsse (27, 28) sich erstreckenden und im Kraftfluss der Reissverschlüsse (27, 28) angeordneten langen Blasen (32) bestehen, die sich beim Aufpumpen mit Druckluft in

16. Anzug gemäss Patentanspruch 5, 6 oder 7 und 13, **dadurch gekennzeichnet, dass**
- eine weitere Schicht in Form eines Futters (1) vorhanden ist, die zwischen die doppelwandige Hülle (4) und den Körper des Trägers zu liegen kommt und mit der äusseren Hülle (3) mindestens teilweise verbunden ist,
- die äussere Hülle (3) und das Futter (1) aus demselben wenig dehnbaren textilen Material gefertigt sind,
- das Oberteil (36), die Oberschenkelteile (39) und Unterschenkelteile (40) je für sich mit ersten Reissverschlüssen (37, 45) geschlossen werden können,
- alle genannten Teile (36, 39, 40) Spannvorrichtungen (38, 41) aufweisen,
- die äussere Hülle (3) und das Futter (1) an je einer Hälfte der ersten Reissverschlüsse (37, 45) zusammengefasst und befestigt sind.
der Querrichtung verkürzen und so der Hülle (3) die vorgesehene Spannung erteilen.

17. Anzug gemäss Patentanspruch 16, **dadurch gekennzeichnet, dass**
- die äussere Hülle (3) und das Futter (1) am Oberteil (36) auch an der anderen Hälfte des ersten Reissverschlusses (37) zusammengefasst und befestigt sind,
- die Spannvorrichtungen (38) für das Oberteil (36) unter den Achseln angeordnet sind.

18. Anzug gemäss Patentanspruch 16 oder 17, **dadurch gekennzeichnet, dass**
- die Spannvorrichtungen (38, 41) aus zwei nebeneinander verlaufenden ersten und zweiten Reissverschlüssen (45, 46) bestehen, die je an ihrer einen Hälfte mittels eines über deren ganze Länge sich erstreckenden textilen Bandes mit je einem Ende der verbundenen äusseren Hülle (3) und dem Futter (1) verbunden sind,
- zwischen den ersten und den zweiten Reissverschlüssen (45, 46) ein elastisches sich über deren ganze Länge sich erstreckendes elastisches textiles Band eingeschaltet ist,
- die zweiten Reissverschlüsse (46) je mittels eines textilen Einschlages (48) überbrückt sind,
- das eine Ende der miteinander verbundenen äusseren Hülle (3) und dem Futter (1) ferner an der einen Hälfte eines dritten Reissverschlusses (49a) befestigt ist, dessen andere Hälfte (49b) mittels eines textilen Bandes mit der einen Hälfte eines vierten Reissverschlusses (50) verbunden ist, welcher seinerseits durch einen textilen Einschlag (51) überbrückt ist,
- die andere Hälfte des vierten Reissverschlusses (50) an ein sich sich über dessen ganze Länge sich erstreckendes textiles Band angeschlossen ist, welches einen über dessen ganze Länge sich erstreckenden Klettverschluss (52) trägt, dessen andere Seite an der äusseren Hülle (3) befestigt ist, wobei der Schliessvorgang mit dem Schliessen des ersten Reissverschlusses (45) und anschliessend mit jenem des zweiten Reissverschlusses (46) beginnt, mit jenem des dritten Reissverschlusses (49a, b) fortgesetzt wird und die endgültige Spannung durch Schliessen des vierten Reissverschlusses (50) aufgebaut wird, unter der Voraussetzung, **dass** der Klettverschluss in der angepassten Stellung bereits zu Beginn fixiert ist.

19. Anzug gemäss Patentanspruch 16 oder 17, **dadurch gekennzeichnet, dass**
- die Spannvorrichtungen (38, 41) aus zwei nebeneinander verlaufenden ersten und zweiten Reissverschlüssen (45, 46) besteht, die je an ihrer einen Hälfte mittels eines über deren ganze Länge sich erstreckenden textilen Bandes mit je einem Ende der verbundenen äusseren Hülle (3) und des Futters (1) verbunden sind,
- zwischen den ersten und den zweiten Reissverschlüssen (45, 46) ein elastisches sich über deren ganze Länge sich erstreckendes elastisches textiles Band eingeschaltet ist,
- der zweite Reissverschluss (46) mittels eines textilen Einschlages (48) überbrückt ist,
- das eine Ende der miteinander verbundenen äusseren Hülle (3) und dem Futter (1) ferner an der einen Hälfte einen dritten Reissverschluss (49a) befestigt ist, dessen andere Hälfte (49b) mittels eines textilen Bandes mit einem pneumatischen Spannelement (54) verbunden ist, welches sich über dessen ganze Länge erstreckt und sich, falls es unter Druck gesetzt wird, quer zu seiner Längsrichtung verkürzt,
- das andere Ende des pneumatischen Spannelementes (54) an ein sich über dessen ganze Länge sich erstreckendes textiles Band angeschlossen ist, welches einen über seine ganze Länge sich erstreckenden Klettverschluss (52) trägt, dessen andere Seite an der äusseren Hülle (3) befestigt ist, wobei der Schliessvorgang mit dem Schliessen des ersten Reissverschlusses (45) und anschliessend mit jenem des zweiten Reissverschlusses (46) beginnt, mit jenem des dritten Reissverschlusses (49a, b) fortgesetzt wird und die endgültige Spannung durch Aufpumpen des pneumatischen Spannelementes (54) aufgebaut wird, unter der Voraussetzung, **dass** der Klettverschluss in der angepassten Stellung bereits zu Beginn fixiert ist.

20. Anzug gemäss Patentansprüchen 16 und 17 und 18 oder 19, **dadurch gekennzeichnet, dass** die Spannvorrichtungen (38, 41) für Oberteil (36) und Oberschenkelteil (39) und Unterschenkelteil (40) gleich ausgeführt sind.

21. Anzug gemäss Patentansprüchen 16 und 17 und 18 oder 19, **dadurch gekennzeichnet, dass** die Spannvorrichtungen (38, 41) für Oberteil (36) und Oberschenkelteil (39) und Unterschenkelteil (40) verschieden ausgeführt sind.

22. Anzug gemäss Patentanspruch 6 oder 7, **dadurch gekennzeichnet, dass**
- eine am Unterarm gegen das Handgelenk hin getragene Druckmanschette (33) vorhanden und an einem textilen Aermel (35) befestigt ist und ein ebenfalls am Aermel (35) fixiertes Reservoir (34) aufweist für die Flüssigkeit (9),
- der Aermel (35) mittels eines elastischen Einsatzes (16) am Oberteil (36) befestigt ist.

23. Anzug gemäss Patentanspruch 22, **dadurch gekennzeichnet, dass** sowohl Druckmanschette (33) als auch Reservoir (34) je ein Ventil (22, 23) zum Füllen und Entlüften aufweisen,

24. Anzug gemäss Patentanspruch 5 oder 6, **dadurch gekennzeichnet, dass** der Anzug an den tiefsten und höchsten Stellen je mindestens zwei Ventile (22, 23) zum Füllen mit der Flüssigkeit (9) und Entlüften aufweist.

25. Anzug gemäss Patentanspruch 5 und 16, **dadurch gekennzeichnet, dass** die Aermel (21) je ein zwei Ventile (22, 23) zum Füllen mit der Flüssigkeit (9) und Entlüften aufweist.

26. Anzug gemäss Patentanspruch 5, **dadurch gekennzeichnet, dass** die Aermel (21) mit dem Thoraxteil (24) des Anzuges durch elastische Einsätze (16) verbunden sind.

27. Anzug gemäss Patentanspruch 5 oder 6, **dadurch gekennzeichnet, dass**
- die die Unterschenkel bedeckenden Teile des Anzuges in je eine Lasche (53), bestehend aus den miteinander verbundenen Wänden (6, 7), fortgesetzt sind,
- diese Laschen (53) den Rest des Fusses bedeckend in den Schuh eingeführt und dort festgezogen werden können, womit der beschleunigungsproportionale Kompensationsdruck auch auf die Fussvenen aufgebaut wird.

## Claims

1. A suit for the protection of its wearer against acceleration forces, such as arise in high performance aircraft when flying in curves, the suit is largely constructed as a double walled skin (4) and the hollow spaces (5) which thereby occur are filled with a fluid (9), which under accelerations ≠ 1g in the momentary and local Z-axis builds up a compensating outer force corresponding to the internal force on the wearer, whereby the double walled skin (4) has an outer wall (6), which comprises a low stretch, watertight flexible material, the fluid (9) present in the hollow spaces (5) forms continuous fluid columns over the whole height of the suit, an inner wall (7) forming the skin (4) is present and is joined together with the outer wall (6) at connecting positions (8), from which the hollow spaces (5) mentioned arise and further means are present for the closing of the suit and for its matching to the momentary bodily situation of its wearer, **characterised in that**
- the inner wall (7) comprises a low-stretch and watertight and flexible material,
- an outer skin (3) is present, which surrounds the double walled skin (4) and covers a large part of the body of the wearer and is produced from low-stretch textile material,
- the outer skin (3) quoted is formed such that owing to the pressure in the hollow spaces (5) in this outer skin (3) tensile forces are built up, which are transmitted to the body positions not covered by the double walled skin (4) and can build up a pressure there corresponding to the tensile force,
- the connection positions (8) bordering the hollow spaces (5) are arranged in such structures that the deformation of the double walled skin (4) caused by the pressure of the fluid present in the hollow spaces (5) permits the inner wall (7), made of low-stretch material, to lie against the body without folds,
- means are present to tension the outer skin (3) of the suit.

2. A suit according to Claim 1, **characterised in that** the connecting positions (8) are created by gluing.

3. A suit according to Claim 1, **characterised in that** the connecting positions (8) are created by welding.

4. A suit according to Claim 1, **characterised in that** the connecting positions (8) are created by sewing and sealing.

5. A suit according to Claim 1 and one of the claims 2 to 4, **characterised in that** it covers essentially the whole body with the exception of the neck, head, hands and feet, the suit has therefore a thorax part (24), a front part (20), a back part (25), armlets (21) and leg parts comprising thigh parts (39) and lower leg parts (40).

6. A suit according to Claim 1 and one of the claims 2 to 4, **characterised in that** it covers only the whole trunk and the legs of the wearer.

7. A suit according to Claim 1 and one of the claims 2 to 4, **characterised in that** it covers only the upper body including the belly/abdominal region by means of an upper part (36), the thighs and the lower legs by means of a thigh part (39) and a lower leg part (40) and therefore arms, seat and knees are left free, covers the parts of the body left free at least in part by elastic textile bands (43), which join the quoted parts of the suit and have means in the form of connecting elements (42) and permit the fluid columns to extend over the entire height of the suit.

8. A suit according to Claims 5, 6 or 7, **characterised in that** the hollow spaces (5) and the connecting positions (8) dividing them extend completely over the entire suit and only the places where the means for adapting and closing the suit are present are excepted from this.

9. A suit according to Claims 5, 6 or 7, **characterised in that** the individual connecting positions (8) lie essentially on lines parallel to each other and the separation distances of the connecting positions (8) on an individual line correspond somewhat to their sideways separation distances.

10. A suit according to Claims 5, 6 or 7, **characterised in that**
- the connecting positions (8) are straight strips which run essentially parallel to each other, whose length corresponds somewhat to their sideways separation distances,
- the individual connecting positions (8) lie essentially on two groups of parallel lines, which are displaced from each other by half the sideways separation distance of two adjacent connecting positions (8), the separation distances of connecting positions (8) lying on an individual line correspond somewhat to double their sideways separation.

11. A suit according to Claims 5, 6 or 7, **characterised in that** the individual connecting positions (8) are straight strips, which are arranged essentially radially about a point and this arrangement of connecting positions (8) can be applied where a basket shaped deformation of the mutually connected walls (6, 7) has to be effected.

12. A suit according to Claims 5, 6 or 7, **characterised in that** the means for closing comprise zip fasteners (17, 19).

13. A suit according to Claim 5 or Claim 6, **characterised in that** the suit has flaps (18), which are equipped with Velcro fasteners and the suit can be closed with the flaps (18) running over the shoulders.

14. A suit according to Claim 5 or Claim 6, **characterised in that** the means for tensioning the outer skin (3) comprise a multiplicity of zip fasteners (27, 28), which are joined in each case by their two halves one to the outer skin (3) and one to the ends of an insert in each case, which are bridged over by closing the zip fasteners (27, 28) and the skin (3) is tensioned by the closing of the zip fasteners (27, 28).

15. A suit according to Claim 5, 6 or Claim 7 and Claim 14, **characterised in that** the means for tensioning the outer skin (3) comprise elongate bladders (32) extending over the whole length of the zip fasteners (27, 28) and in positive engagement with the zip fasteners (27, 28), which when inflated with compressed air shorten in the cross direction and thus provide the intended tension to the skin (3).

16. A suit according to Claim 5, 6 or Claim 7 and Claim 13, **characterised in that**
- a further layer in the form of a lining (1) is present, which comes to lie between the double walled skin (4) and the body of the wearer, and is at least partly joined to the outer skin (3),
- the outer skin (3) and the lining (1) are produced from the same low-stretch material,
- the upper part (36), the thigh parts (39) and the lower leg parts (40) can each be closed in themselves using first zip fasteners (37, 45),
- all the named parts (36, 39, 40) have tensioning devices (38, 47),
- the outer skin (3) and the lining (1) are taken together and fastened to each half of the first zip fastener (37, 45).

17. A suit according to Claim 16, **characterised in that**
- the outer skin (3) and the lining (1) are also taken together and fastened to the other half of the first zip fastener (37),
- the tensioning devices (38) for the upper part (36) are arranged under the shoulders.

18. A suit according to Claim 16 or Claim 17, **characterised in that**
- the tensioning devices (38, 41) comprise two first and second zip fasteners (45, 46) running alongside each other, one half each of which are joined by means of a textile band extending over their entire length each with one end of the combined outer skin (3) and the lining (1),
- between the first and the second zip fasteners (45, 46) an elastic textile band is inserted, extending elastically over their entire length,
- the second zip fasteners (46) are each bridged over by textile inserts (48),
- one end of the outer skin (3) and the lining (1), joined together is also fastened to one half of a third zip fastener (49a), whose other half (49b) is joined by means of a textile band with one half of a fourth zip fastener (50), which is for its part bridged over by a textile insert (51),
- the other half of the fourth zip fastener (50) is joined to a textile band, extending over its entire length, which carries a Velcro fastener (52), extending over its entire length, whose other side is fastened to the outer skin (3), whereby the closing process begins with the closing of the first zip fastener (45) and then with that of the second zip fastener (46), is continued with that of the third zip fastener (49a, b) and the final tensioning is built up by the closure of the fourth zip fastener (50), with the precondition that the Velcro fastener has already been fixed at the beginning in the fitted position.

19. A suit according to Claim 16 or Claim 17, **characterised in that**
- the tensioning devices (38, 41) comprise two first and second zip fasteners (45, 46) running longside each other, one half of which are each joined by means of a textile band extending over their entire length each with one end of the combined outer skin (3) and the lining (1),
- between the first and the second zip fasteners (45, 46) an elastic textile band is inserted, extending elastically over their entire length,
- the second zip fasteners (46) are each bridged over by textile inserts (48),
- one end of the outer skin (3) and the lining (1), joined together is also fastened to one half of a third zip fastener (49a), whose other half (49b) is joined by means of a textile band to a pneumatic tensioning element (54), which extends over its entire length and shortens, if it is put under pressure, at right angles to its longitudinal direction,
- the other end of the pneumatic tensioning element (54) is joined to a textile band extending over its entire length, which carries a Velcro fastener (52) extending over its entire length, whose other side is fastened to the outer skin (3), whereby the closing process begins with the closure of the first zip fastener (45), and then with that of the second zip fastener (46), continues with that of the third zip fastener (49a, b) and the final tensioning is built up by inflation of the pneumatic tensioning element (54), under the precondition that the Velcro fastener has already been fixed at the beginning in the fitted position.

20. A suit according to Claim 16 and Claim 17 and Claim 18 or Claim 19, **characterised in that** the tensioning devices (38, 41) for the upper part (36) and the thigh parts (39) and the lower leg parts (40) are carried out in the same way.

21. A suit according to Claim 16 and Claim 17 and Claim 18 or Claim 19, **characterised in that** the tensioning devices (38, 41) for the upper part (36) and the thigh parts (39) and the lower leg parts (40) are carried out differently.

22. A suit according to Claim 6 or Claim 7, **characterised in that**
- a pressure cuff (33) is present, worn on the lower arm towards the hand joint and fastened to a textile armlet (35) and has a reservoir (34) for the fluid (9), similarly fixed to the armlet (35),
- the armlet (35) is fastened to the upper part (36) by means of an elastic insert (16).

23. A suit according to Claim 22, **characterised in that** both the pressure cuff (33) and also the reservoir (34) have a valve (22, 23) each for filling and ventilation.

24. A suit according to Claim 5 or Claim 6, **characterised in that** the suit has at least two valves (22, 23) each at the lowest and highest points for filling with fluid (9) and for ventilation.

25. A suit according to Claim 5 and Claim 16, **characterised in that** the armlets (21) each have two valves (22, 23) for filling with fluid (9) and for ventilation.

26. A suit according to Claim 5, **characterised in that** the armlets (21) are joined to the thorax part (24) of the suit by elastic inserts (16).

27. A suit according to Claim 5 or Claim 6, **characterised in that**
- the parts of the suit covering the lower legs are each continued in a tongue (53), comprising the interconnected walls 6, 7),
- these tongues (53) can be introduced into the shoe and drawn tight there covering the remainder of the foot, whereby the compensatory pressure proportional to the acceleration is also built up on the veins of the foot.

## Revendications

1. Vêtement pour protéger la personne qui le porte contre les forces d'accélération telles qu'elles apparaissent dans les avions très performants, dans les courbes, ce vêtement étant conçu en majeure partie comme une enveloppe à double paroi (4) et les cavités (5) ainsi formées étant remplies d'un liquide (9) qui, lors d'accélérations ≠1g dans l'axe vertical instantané et local, produit une pression extérieure de compensation correspondant à la pression interne de la personne qui porte le vêtement, étant précisé que l'enveloppe à double paroi (4) comporte une paroi extérieure (6) qui se compose d'une matière flexible un peu extensible et étanche au liquide, que le liquide (9) qui se trouve dans les cavités (5) forme une colonne de liquide sur toute la hauteur du vêtement, qu'il est prévu une paroi intérieure (7) qui définit l'enveloppe (4), à l'intérieur, et qui est reliée à la paroi extérieure (6) au niveau de points de liaison (8), ce qui forme lesdites cavités (5), et qu'il est également prévu des moyens pour fermer le vêtement et pour l'adapter à la situation momentanée du corps de la personne qui le porte,
**caractérisé**
- en ce que la paroi intérieure (7) se compose elle aussi d'une matière peu extensible, étanche au liquide et flexible,
- en ce qu'il est prévu une enveloppe extérieure (3) qui entoure l'enveloppe à double paroi (4), qui couvre de grandes parties du corps de la personne et qui est fabriquée à partir d'une matière textile peu extensible,
- en ce que l'enveloppe extérieure (3) est formée de telle sorte que sous l'action de la pression qui règne dans les cavités (5), il se forme dans ladite enveloppe extérieure (3) des efforts de tension qui sont transmis aux parties du corps non couvertes par l'enveloppe à double paroi (4) et qui peuvent créer sur ces parties du corps une pression correspondant à l'effort de tension,
- en ce que les points de liaison (8) qui délimitent les cavités (5) sont disposés suivant des structures telles que sous l'effet de la déformation de l'enveloppe à double paroi (4) provoquée par la pression du liquide contenu dans les cavités (5), la paroi intérieure en matière peu extensible (7) puisse s'appliquer sans plis contre le corps de la personne, et
- en ce qu'il est prévu des moyens pour tendre l'enveloppe extérieure (3) du vêtement.

2. Vêtement selon la revendication 1, **caractérisé en ce que** les points de liaison (8) sont réalisés par collage.

3. Vêtement selon la revendication 1, **caractérisé en ce que** les points de liaison (8) sont réalisés par soudage.

4. Vêtement selon la revendication 1, **caractérisé en ce que** les points de liaison (8) sont réalisés par piqûre et étanchéification.

5. Vêtement selon la revendication 1 et l'une des revendications 2 à 4, **caractérisé en ce qu'**il couvre globalement tout le corps, sauf le cou, la tête, les mains et les pieds, et il comprend donc une partie pour le thorax (24), une partie avant (20), une partie arrière (25), des manches (21) et des parties pour les jambes formées de parties pour les cuisses (39) et de parties pour les jambes (40).

6. Vêtement selon la revendication 1 et l'une des revendications 2 à 4, **caractérisé en ce qu'**il couvre seulement tout le tronc et les jambes de la personne.

7. Vêtement selon la revendication 1 et l'une des revendications 2 à 4, **caractérisé en ce qu'**il couvre seulement le buste, y compris la région abdominale, à l'aide d'une partie supérieure (36), les cuisses et les jambes à l'aide de parties pour les cuisses (39) et de parties pour les jambes (40), et laisse donc les bras, le postérieur et les genoux découverts, il couvre au moins partiellement ces zones du corps découvertes à l'aide de bandes textiles élastiques (43) qui relient les parties du vêtement, et comporte des moyens, sous forme d'éléments de liaison (42), pour permettre à la colonne de liquide de s'étendre sur toute la hauteur du vêtement.

8. Vêtement selon les revendications 5, 6 ou 7, **caractérisé en ce que** les cavités (5) et les points de liaison (8) qui les délimitent s'étendent sur tout le vêtement, à l'exception, seulement, des endroits où se trouvent les moyens pour adapter et fermer le vêtement.

9. Vêtement selon la revendication 5, 6 ou 7, **caractérisé en ce que** les points de liaison individuels (8) sont situés globalement sur des lignes parallèles, et l'écartement des points de liaison (8) situés sur une ligne individuelle correspond à peu près à leur écartement latéral.

10. Vêtement selon les revendications 5, 6 ou 7, **caractérisé**
- en ce que les points de liaison (8) sont des segments droits qui sont globalement parallèles et dont la longueur correspond à peu près à leur écartement latéral,
- en ce que les points de liaison individuels (8) se trouvent globalement sur deux séries de lignes parallèles qui sont décalées l'une par rapport à l'autre suivant la moitié de l'écartement latéral de deux points de liaison (8) voisins, et
- en ce que l'écartement des points de liaison (8) situés sur une ligne individuelle correspond à peu près au double de leur écartement latéral.

11. Vêtement selon la revendication 5, 6 ou 7, **caractérisé en ce que** les points de liaison individuels (8) sont des segments droits qui sont disposés globalement radialement autour d'un point, et cette disposition de points de liaison (8) peut être utilisée là où les parois (6, 7) reliées entre elles doivent subir une déformation en forme de corbeille.

12. Vêtement selon la revendication 5, 6 ou 7, **caractérisé en ce que** les moyens de fermeture se composent de fermetures à glissière (17, 19).

13. Vêtement selon la revendication 5 ou 6, **caractérisé en ce qu'**il comporte des rabats (18) qui sont garnis de fermetures auto-agrippantes, et il est apte à être fermé à l'aide de ces rabats (18) qui s'étendent sur les épaules.

14. Vêtement selon la revendication 5 ou 6, **caractérisé en ce que** les moyens pour tendre l'enveloppe extérieure (3) se composent de plusieurs fermetures à glissière (27, 28) dont les deux moitiés sont reliées à l'enveloppe extérieure (3) et aux extrémités d'un pli (31) qui est couvert quand lesdites fermetures à glissière (27, 28) sont fermées, et l'enveloppe (3) est tendue par les fermetures à glissière (27, 28) fermées.

15. Vêtement selon les revendications 5, 6 ou 7 et 14, **caractérisé en ce que** les moyens pour tendre l'enveloppe extérieure (3) se composent de poches longues (32) qui s'étendent sur toute la longueur des fermetures à glissière (27, 28), qui sont disposées dans le flux de force de celles-ci et qui, lorsqu'elles sont gonflées avec de l'air comprimé, raccourcissent dans le sens transversal et fournissent ainsi à l'enveloppe (3) la tension prévue.

16. Vêtement selon les revendications 5, 6 ou 7 et 13, **caractérisé**
- en ce qu'il est prévu une autre couche sous la forme d'une doublure (1) qui vient se placer entre l'enveloppe à double paroi (4) et le corps de la personne, et qui est au moins partiellement reliée à l'enveloppe extérieure (3),
- en ce que l'enveloppe extérieure (3) et la doublure (1) sont réalisées à partir de la même matière textile peu extensible,
- en ce que la partie supérieure (36), les parties pour les cuisses (39) et les parties pour les jambes (40) peuvent être fermées à l'aide de premières fermetures à glissière (37, 45),
- en ce que les parties (36, 39, 40) comportent toutes des dispositifs de tension (38, 41) et
- en ce que l'enveloppe extérieure (3) et la doublure (1) sont réunies et fixées au niveau d'une moitié des premières fermetures à glissière (37, 45).

17. Vêtement selon la revendication 16, **caractérisé**
- en ce que l'enveloppe extérieure (3) et la doublure (1) prévues sur la partie supérieure (36) sont également réunies et fixées au niveau de l'autre moitié de la première fermeture à glissière (37), et
- en ce que les dispositifs de tension (38) pour la partie supérieure (36) sont disposés sous les aisselles.

18. Vêtement selon la revendication 16 ou 17, **caractérisé**
- en ce que les dispositifs de tension (38, 41) se composent de deux premières et deux deuxièmes fermetures à glissière juxtaposées (45, 46) dont une moitié est reliée à l'aide d'une bande textile qui s'étend sur toute leur longueur à une extrémité de l'enveloppe extérieure (3) et de la doublure (1) reliées,
- en ce qu'il est prévu, entre les premières et les deuxièmes fermetures à glissière (45, 46), une bande textile élastique qui s'étend sur toute leur longueur,
- en ce que les deuxièmes fermetures à glissière (46) sont couvertes par un pli textile (48),
- en ce qu'une extrémité de l'enveloppe extérieure (3) et de la doublure (1) reliées est en outre fixée à une moitié d'une troisième fermeture à glissière (49a) dont l'autre moitié (49b) est reliée à l'aide d'une bande textile à une moitié d'une quatrième fermeture à glissière (50) elle-même couverte par un pli textile (51), et
- en ce que l'autre moitié de la quatrième fermeture à glissière (50) est raccordée à une bande textile s'étendant sur toute sa longueur et portant une fermeture auto-agrippante (52) qui s'étend sur toute sa longueur et dont l'autre côté est fixé à l'enveloppe extérieure (3), l'opération de fermeture commençant par la fermeture de la première fermeture à glissière (45) puis de la deuxième (46) et se poursuivant par la fermeture de la troisième (49a, b), et la tension définitive étant obtenue grâce à la fermeture de la quatrième (50), à condition que la fermeture auto-agrippante soit fixée dès le début dans la position adaptée.

19. Vêtement selon la revendication 16 ou 17, **caractérisé**
- en ce que les dispositifs de tension (38, 41) se composent de deux premières et deux deuxièmes fermetures à glissière juxtaposées (45, 46) dont une moitié est reliée à l'aide d'une bande textile qui s'étend sur toute leur longueur à une extrémité de l'enveloppe extérieure (3) et de la doublure (1) reliées,
- en ce qu'il est prévu, entre les premières et les deuxièmes fermetures à glissière (45, 46), une bande textile élastique qui s'étend sur toute leur longueur,
- en ce que la deuxième fermeture à glissière (46) est couverte par un pli textile (48),
- en ce qu'une extrémité de l'enveloppe extérieure (3) et de la doublure (1) reliées est en outre fixée à une moitié d'une troisième fermeture à glissière (49a) dont l'autre moitié (49b) est reliée à l'aide d'une bande textile à un élément de tension pneumatique (54) qui s'étend sur toute sa longueur et qui, au cas où il est mis sous pression, raccourcit transversalement par rapport à son sens longitudinal, et
- en ce que l'autre extrémité de l'élément de tension pneumatique (54) est raccordée à une bande textile s'étendant sur toute sa longueur et portant une fermeture auto-agrippante (52) qui s'étend sur toute sa longueur et dont l'autre côté est fixé à l'enveloppe extérieure (3), l'opération de fermeture commençant par la fermeture de la première fermeture à glissière (45) puis de la deuxième (46) et se poursuivant par la fermeture de la troisième (49a, b), et la tension définitive étant obtenue grâce au gonflage de l'élément de tension pneumatique (54), à condition que la fermeture auto-agrippante soit fixée dès le début dans la position adaptée.

20. Vêtement selon les revendications 16 et 17 et 18 ou 19, **caractérisé en ce que** les dispositifs de tension (38, 41) pour la partie supérieure (36), la partie pour la cuisse (39) et la partie pour la jambe (40) sont identiques.

21. Vêtement selon les revendications 16 et 17 et 18 ou 19, **caractérisé en ce que** les dispositifs de tension (38, 41) pour la partie supérieure (36), la partie pour la cuisse (39) et la partie pour la jambe (40) sont différents.

22. Vêtement selon la revendication 6 ou 7, **caractérisé**
- en ce qu'un manchon de pression (33) est porté sur l'avant-bras, en direction du poignet, est fixé à une manche textile (35) et comporte un réservoir (34), lui aussi fixé à la manche (35), pour le liquide (9), et
- en ce que la manche (35) est fixée à la partie supérieure (36) à l'aide d'une pièce élastique (16).

23. Vêtement selon la revendication 22, **caractérisé en ce que** le manchon de pression (33) et le réservoir (34) comportent tous les deux une valve (22, 23) pour le remplissage et la purge d'air.

24. Vêtement selon la revendication 5 ou 6, **caractérisé en ce qu'**il comporte, à l'endroit le plus bas et à l'endroit le plus haut, au moins deux valves (respectivement 22 et 23) pour être rempli du liquide (9) et pour la purge d'air.

25. Vêtement selon les revendications 5 et 16, **caractérisé en ce que** chaque manche (21) comporte deux valves (22, 23) pour être remplie du liquide (9) et pour la purge d'air.

26. Vêtement selon la revendication 5, **caractérisé en ce que** les manches (21) sont reliées à la partie pour le thorax (24) du vêtement par des pièces élastiques (16).

27. Vêtement selon la revendication 5 ou 6, **caractérisé**
- en ce que les parties du vêtement qui couvrent les jambes se prolongent par des pattes respectives (53) qui sont formées par les parois (6, 7) reliées entre elles, et
- en ce que ces pattes (53) sont introduites dans la chaussure pour couvrir le reste du pied et peuvent être fixées dans ladite chaussure, moyennant quoi la pression de compensation proportionnelle à l'accélération se forme aussi sur les veines du pied.
